# DEMANDE DE BREVET EUROPEEN

(11) **EP 4 491 602 A1**
(43) Date de publication de la demande: **15.01.2025**
(21) Numéro de dépôt: 24187742.2
(22) Date de dépôt: 10.07.2024
(51) Int. Cl.: C04B 35/599, C01B 21/082, C04B 33/132, C04B 35/622, C04B 35/626, C01B 21/068

(54) **PROCÉDÉ DE FABRICATION D'UNE POUDRE CÉRAMIQUE À BASE DE BETA-SIALON PAR CARBONITRURATION DE RÉSIDUS PORCELAINIERS**

(30) Priorité: 13.07.2023 FR 2307565
(71) Demandeur: Université de Limoges, 87032 Limoges (FR); Centre National de la Recherche Scientifique, 75016 Paris (FR)
(72) Inventeur: MAITRE, Alexandre, 87270 Couzeix (FR); JAYAT, Valentin, 87000 Limoges (FR); PRADEILLES, Nicolas, 87570 Rilhac-Rancon (FR)
(74) Mandataire: Cabinet Chaillot

(57) **Abrégé**

L'invention porte sur un procédé de fabrication d'une poudre céramique à base de β-SiAlON apte la production par frittage de pièces céramiques de densité supérieure à 90 %, caractérisé par le fait qu'il comporte les étapes successives suivantes : (1) broyage d'au moins un rebut porcelainier à base d'un mélange de kaolin, quartz et feldspath ayant la composition suivante : (a) 20 à 30 % en poids d'Al₂O₃ ; (b) 60 à 70 % en poids de SiO₂ ; (c) 1 à 10 % en poids de K₂O ; (d) 0,1 à 10 % en poids de Fe₂O₃ ; (e) 0,1 à 10 % en poids de MgO ; (f) 0,1 à 10 % en poids de Na₂O ; (g) 0,1 à 10 % en poids de CaO ; (h) 0,01 à 5 % en poids de TiO₂, pour 100 % en poids de (a) + (b) + (c) + (d) + (e) + (f) + (g) + (h), jusqu'à l'obtention d'une poudre dont la taille moyenne des particules est inférieure ou égale à 2 microns ; (2) mélange de la poudre obtenue en (1) avec du carbone pulvérulent ; (3) traitement thermique de carbonitruration de la poudre obtenue en (2), à une température T comprise entre 1525 et 1625°C pendant un laps de temps t de 3 à 6 h, sous un balayage d'azote,

le broyage de l'étape (1) étant conduit en effectuant les opérations successives suivantes :
- un pré-broyage permettant de faire passer les rebuts porcelainiers d'une dimension allant du cm à la dizaine de cm à une dimension de 1 mm à 0,1 mm avec une répartition multimodale, ledit pré-broyage pouvant notamment être effectué dans un concasseur à mâchoires ou un broyeur à percussion ;
- un broyage d'ajustement de la granulométrie, permettant de faire passer les rebuts porcelainiers prébroyés à une dimension moyenne de particule entre 2 et 30 microns avec une répartition bimodale des particules, ledit broyage pouvant notamment être effectué dans un broyeur planétaire ;
- un broyage de finition par attrition, permettant de faire passer les particules à une dimension moyenne inférieure ou égale à 1,5 microns, avec une répartition monomodale de celles-ci.

## Description

La présente invention concerne la fabrication d'une poudre céramique à base de β-SiAlON, apte à la production par frittage de pièces céramiques de densité supérieure à 98 %.

La phase céramique β-SiAlON est recherchée car elle présente des propriétés physico-chimiques prometteuses, telles qu'une forte rigidité et une dureté élevée, une tenue prometteuse sous un environnement oxydant à haute température, et une très bonne résistance aux frottements.

Ces propriétés intéressantes conduisent à envisager l'emploi de cette céramique dans de nombreux secteurs d'applications, tels que le secteur de la sidérurgie, par exemple pour fabriquer des conduites et des poches de transport de métaux ou d'alliages liquides, des gaines de sondes telles que les thermoplongeurs, le secteur des abrasifs, le secteur du transport civil ou militaire, par exemple pour fabriquer des pièces de turboréacteurs pour l'aéronautique telles que les bougies d'allumage ou des roulements à billes pour les véhicules électriques.

Recherchant par ailleurs à valoriser les résidus porcelainiers, issus du traitement thermique de dégourdi, les présents inventeurs ont découvert de façon surprenante qu'en convertissant par carbonitruration les résidus porcelainiers une fois broyés, on parvient à une poudre céramique comportant une phase majoritaire de β-SiAlON, une phase de corindon , et une phase de χ-SiAlON et capable de subir un traitement thermique pour la densifier en une pièce céramique ayant une densité d'au moins 90 % et de bonnes propriétés mécaniques. Dans certains cas, lors du frittage, la phase de corindon - qui est un adjuvant de frittage - peut avantageusement diminuer, voire disparaître au profit des deux autres phases, conduisant donc à une pièce à base de β-SiAlON très dense et ayant de bonnes propriétés mécaniques. On peut alors conduire un frittage direct de la poudre obtenue, sans avoir à ajouter d'adjuvant de frittage.

La présente invention a donc pour objet un procédé de fabrication d'une poudre céramique à base de β-SiAlON apte à la production par frittage de pièces céramiques de densité supérieure à 90 %, caractérisé par le fait qu'il comporte les étapes successives suivantes :
(1) broyage d'au moins un rebut porcelainier à base d'un mélange de kaolin, quartz et feldspath ayant la composition suivante :
   (a) 20 à 30 % en poids d'Al₂O₃
   (b) 60 à 70 % en poids de SiO₂
   (c) 1 à 10 % en poids de K₂O
   (d) 0,1 à 10 % en poids de Fe₂O₃
   (e) 0,1 à 10 % en poids de MgO
   (f) 0,1 à 10 % en poids de Na₂O
   (g) 0,1 à 10 % en poids de CaO
   (h) 0,01 à 5 % en poids de TiO₂
      pour 100 % en poids de (a) + (b) + (c) + (d) + (e) + (f) + (g) + (h), jusqu'à l'obtention d'une poudre dont la taille moyenne des particules est inférieure ou égale à 2 um ;
(2) mélange de la poudre obtenue en (1) avec du carbone pulvérulent ;
(3) traitement thermique de carbonitruration de la poudre obtenue en (2), à une température T comprise entre 1525 et 1625°C pendant un laps de temps t de 3 à 6 h, sous un balayage d'azote,
le broyage de l'étape (1) étant conduit en effectuant les opérations successives suivantes :
- un pré-broyage permettant de faire passer les rebuts porcelainiers d'une dimension allant du cm à la dizaine de cm à une dimension de 1 mm à 0,1 mm avec une répartition multimodale, ledit pré-broyage pouvant notamment être effectué dans un concasseur à mâchoires ou un broyeur à percussion ;
- un broyage d'ajustement de la granulométrie, permettant de faire passer les rebuts porcelainiers prébroyés à une dimension moyenne de particule entre 2 et 30 um avec une répartition bimodale des particules, ledit broyage pouvant notamment être effectué dans un broyeur planétaire ;
- un broyage de finition par attrition, permettant de faire passer les particules à une dimension moyenne inférieure ou égale à 1,5 um, avec une répartition monomodale de celles-ci.

Lors du broyage d'ajustement de la granulométrie, les particules peuvent présenter un diamètre D50 de 1,89 µm.

Lors du broyage de finition par attrition, les particules peuvent présenter un diamètre D50 de 1,28 µm.

Le diamètre D50 est le diamètre médian auquel la moitié des particules ou un diamètre supérieur et la moitié des particules un diamètre inférieur.

Les rebuts porcelainiers peuvent être des rebuts de la cuisson dite de dégourdi, laquelle, lors de la fabrication de pièces en porcelaine, fait suite à la réalisation de pièces crues par coulage ou par calibrage ou par pressage, à partir de pâtes à base de kaolin, quartz et feldspath.

On peut conduire le broyage d'ajustement de la granulométrie de l'étape (1) dans un broyeur planétaire à l'aide de billes en alumine de 1 cm de diamètre.

On peut conduite le broyage de finition par attrition de l'étape (1) pendant 2 heures 30 à l'aide de billes en zircone de 0,8 mm de diamètre.

Les dimensions de particules peuvent être mesurées à l'aide d'un appareil de mesure morphologique selon la théorie de Fraunhofer : HORIBA Laser Scattering Particle Size Distribution Analyzer LA-950 de précision à 0,6 %. Le résultat est illustré sous forme de courbe semi-logarithmique selon les critères de la norme ISO 13320.

Le carbone pulvérulent peut être choisi parmi le noir de carbone, le noir de fumée, le charbon et le charbon actif.

À l'étape (2), on peut ajouter du Fe₂O₃ à titre d'agent favorisant la conversion en β-SiAlON, à raison notamment de jusqu'à 0,5 partie en poids pour 100 parties en poids de la poudre obtenue à l'étape (1), en particulier de 0,1 jusqu'à 0,5 partie en poids pour 100 parties en poids de la poudre obtenue à l'étape (1).

À l'étape (2) de mélange, on peut utiliser 19 à 22 parties en poids de carbone pulvérulent pour 100 parties en poids de la poudre obtenue en (1).

La réaction suivie au cours du procédé de carbonitruration du résidu porcelainier peut donc être celle de formation de la phase β-SiAlON à partir d'un mélange de feldspath et de métakaolin :

K₂O, 6SiO₂, Al₂O₃ + 9C + 3N₂ → Si₄Al₂O₂N₆ + 2SiO₂ + K₂O + 9CO

On peut conduire la carbonitruration sous un balayage d'azote à un débit de 50 à 75 L/h.

On peut conduire la carbonitruration sur une poudre en contact direct avec l'atmosphère de traitement thermique ce qui permet de favoriser l'échappement des phases volatiles produites au cours de la réaction de carbonitruration, la cinétique de formation de la phase β-SiAlON étant ainsi favorisée.

Le traitement thermique de l'étape (3) peut comporter une montée préalable en température du mélange de l'étape (2) jusqu'à la température T.

On peut conduire la carbonitruration sur une poudre à l'air libre.

Selon l'invention, on peut obtenir une poudre céramique ayant la composition suivante :
- 60 à 87 % en poids de β-SiAlON ;
- 11 à 30 % en poids de α-Al₂O₃ ;
- 2 à 8 % en poids de x-SiAlON ;
- 0 à 5 % en poids de mullite.

Les Exemples suivants illustrent la présente invention sans toutefois en limiter la portée.

### Exemple 1 (selon l'invention) : Fabrication d'une poudre céramique à base de β-SiAlON

### (1) Obtention d'une matière première pulvérulente

On a utilisé un rebut porcelainier constitué par des « massifs » de porcelaine de coulage, de porcelaine de calibrage et de porcelaine de pressage ayant subi une étape de traitement thermique de dégourdi à 980°C. La taille des massifs varie de 10 à 1 cm. La composition de ces massifs était la suivante :
a. 28,23 % en poids d'Al₂O₃
b. 64,13% en poids de SiO₂
c. 5,69 % en poids de K₂O
d. 0,48 % en poids de Fe₂O₃
e. 0,547 % en poids de MgO
f. 0,474 % en poids de Na₂O
g. 0,358 % en poids de CaO
h. 0,091 % en poids de TiO₂
pour 100 % en poids de (a) + (b) + (c) + (d) + (e) + (f) + (g) + (h)

### Pré-broyage en broyeur à percussion

On a concassé les massifs dans le concasseur à mâchoires compact FRITSCH PULVERISETTE 1 pour les faire passer d'une dimension allant du cm à la dizaine de cm à des particules d'une dimension de 1 mm à 0,1 mm avec une répartition multimodale, le broyage étant ici assuré à l'aide d'une forte pression exercée par une mâchoire fixe et une mâchoire mobile dans la chambre de broyage fermée, les plaques de broyage étant d'abord en position 3 pour uniformiser la dimension des rebuts, puis en position 10.

La poudre obtenue est multimodale.

### Broyage d'ajustement de la granulométrie finale

On a conduit ensuite un broyage des matières premières ainsi concassées dans le broyeur planétaire PULVERISETTE 6, avec 50 billes de broyage de 1cm de diamètre dans la jarre de broyage, la vitesse de rotation de la jarre dans le broyeur étant fixée à 490 tpm avec un temps de maintien de 10 minutes de broyage, sans pause. Cette étape de broyage planétaire permet d'obtenir une poudre micrométrique de distribution bimodale, deux types de population étant générées *in fine,* à savoir des agglomérats de particules qui subsistent encore après ce traitement de broyage, et des particules isolées. La distribution bimodale présente un premier pic à 2,27 µm avec une fraction volumique de 9,9 % et un deuxième pic à 29,9 µm avec une faction volumique de 1,8 %. Le diamètre moyen des particules est de 2,5 µm.

### Broyage de finition par attrition

On a alors conduit une étape d'attrition de la poudre ainsi obtenue dans un attriteur Netzsch Labstar avec 550g de billes en zircone de diamètre 0,8 mm avec 110g de poudre dans la jarre de broyage puis 250g d'eau contenant 0,05 % en poids du dispersant - défloculant commercialisé par la Société CERADEL sous la dénomination Dolaflux, la vitesse de rotation étant fixée à 1000 tours/min pendant une durée de 2h30, sans pause. On a obtenu une répartition monomodale centrée sur une taille moyenne de particules de 1 µm.

### (2) Mélange de la matière pulvérulente avec du carbone

On a mélangé la matière première pulvérulente obtenue en (1) avec du noir de fumée commercialisé par la Société Alfa Aesar sous la dénomination « 39724 Carbon black, acétylène, 50% compressed, 99,9+% » dans une proportion massique de 21%.

À cet effet, on a placé le mélange dans un bol de broyage cylindrique avec couverture en corindon fritté de la marque SODIPRO. Le mélange est opéré à l'aide d'un broyeur planétaire Fritsch PULVERISETTE 6 avec 50 billes de broyage de 1 cm de diamètre dans la jarre de broyage pendant une durée de 10 minutes avec une vitesse de rotation de 490 tpm.

### (3) Carbonitruration

On a conduit un traitement thermique de carbonitruration, sans couvercle sur le creuset contenant le mélange réactionnel, le cycle thermique étant composé :
- d'une montée en température jusqu'à 1550°C ;
- d'un maintien de 4h à cette température sous un balayage d'azote, à un débit de 75L/h.

La disposition sans couvercle sur le creuset contenant le mélange permet de favoriser l'échappement des phases volatiles produites au cours de la réaction de carbonitruration. La cinétique de formation de la phase β-SiAlON est ainsi favorisée.

Après cette étape de traitement thermique de carbonitruration, la composition du produit de réaction est la suivante :

| | |
|---|---|
| β-SiAlON | 82% en poids |
| Al₂O₃ (corindon) | 15% en poids |
| x-SiAlON | 3% en poids |
| | 100% en poids |

### Exemple 2 (exemple d'application) : Frittage de la poudre obtenue à l'Exemple 1

On a conduit un frittage flash (« Spark Plasma Sintering » - SPS) de la poudre obtenue à l'Exemple 1. Dans cette technique de frittage, le chauffage est assuré par le passage d'un courant électrique continu pulsé. Une quantité de l'ordre de 3g de poudre carbonitrurée est pesée et introduite dans une matrice de frittage SPS en graphite de diamètre 20mm. Un pré-compactage de la poudre contenue dans la matrice de frittage SPS est réalisé à l'aide d'une pastilleuse presse Atlas manuelle 15011 à 1 tonne. Le cycle thermomécanique appliqué est constitué d'une montée en température avec une vitesse de 100°C/min jusqu'à 1450°C puis d'un maintien de 5 minutes à cette température. Le refroidissement est assuré avec la même vitesse à savoir 100°C/min. Une charge uniaxiale de 50 MPa est appliquée pendant tout le cycle thermique.

On a ainsi pu obtenir une pièce de densité relative de 90,63% avec une phase β-SiAlON de 73% en poids, une phase d'α-Al₂O₃ de 19% en poids, une phase de x-SiAlON de 6% en poids et une phase de mullite de 2% en poids.

Les performances mécaniques de dureté Vickers Hσ1 de 15,4 ± 1 GPa et de Module d'Young de 238 ± 10 GPa rendent ces pièces céramiques, produites à partir de rebuts porcelainiers, comparables aux pièces céramiques à base de β-SiAlON du commerce.

### Exemple d'application (selon l'invention) 3

On a procédé comme aux Exemples 1 et 2, en ajoutant 18% de noir de fumée et en conduisant l'étape de carbonitruration à 1625°C.

Les résultats sont indiqués dans le Tableau suivant.

### Exemple d'application (selon l'invention) 4

On a procédé comme aux Exemples 1 et 2, en ajoutant 0,5% de Fe₂O₃ à l'étape de carbonitruration.

Les résultats sont indiqués dans le Tableau suivant.

### Exemple comparatif 5

On a procédé comme aux Exemples 1 et 2 en conduisant l'étape de carbonitruration à 1650°C.

Le Tableau 1 indique les résultats obtenus

**[Table. 1]**

| Exemple | 2 (invention) | 3 (invention) | 4 (invention) | 5 (comparatif) |
|---|---|---|---|---|
| Composition des rebuts porcelainiers de base (% en poids) | | | | |
| Al₂O₃ | 28,23 | 28,23 | 28,23 | 28,23 |
| SiO₂ | 64,13 | 64,13 | 64,13 | 64,13 |
| K₂O | 5,69 | 5,69 | 5,69 | 5,69 |
| Fe₂O₃ | 0,48 | 0,48 | 0,48 | 0,48 |
| MgO | 0,547 | 0,547 | 0,547 | 0,547 |
| Na₂O | 0,474 | 0,474 | 0,474 | 0,474 |
| CaO | 0,358 | 0,358 | 0,358 | 0,358 |
| TiO₂ | 0,091 | 0,091 | 0,091 | 0,091 |
| Mélange avec le noir de fumée | | | | |
| % de noir de fumée | 21 | 18 | 21 | 21 |
| % de Fe₂O₃ | - | - | 0,5 | - |
| Carbonitruration T(°C) | 1550 | 1625 | 1550 | 1650 |
| t (h) | 4 | 4 | 4 | 4 |
| Azote (L/h) | 75 | 75 | 75 | 75 |
| Composition après carbonitruration | | | | |
| (% en poids) β-SiAlON | 76 | 61 | 82 | 59 |
| α-Al₂O₃ | 18 | 26 | 15 | 9 |
| x-SiAlON | 5 | 8 | 3 | - |
| 15R-SiAlON | - | - | - | 32 |
| Mullite | 1 | 5 | - | - |
| Composition après frittage « flash » à 1450°C pendant 5 minutes (% en poids) | | | | |
| β-SiAlON | 73 | 62 | 88 | 56 |
| α-Al₂O₃ | 19 | 15 | 7 | 27 |
| x-SiAlON | 6 | 15 | 5 | 17 |
| 15R-SiAlON | - | - | - | - |
| Mullite | 2 | 8 | - | - |
| Densité | 90,63 | 96,74 | 98, 34 | 79,18 |

## Revendications

1. - Procédé de fabrication d'une poudre céramique à base de β-SiAlON apte la production par frittage de pièces céramiques de densité supérieure à 90 %, **caractérisé par le fait qu'**il comporte les étapes successives suivantes :
(1) broyage d'au moins un rebut porcelainier à base d'un mélange de kaolin, quartz et feldspath ayant la composition suivante :
(a) 20 à 30 % en poids d'Al₂O₃
(b) 60 à 70 % en poids de SiO₂
(c) 1 à 10 % en poids de K₂O
(d) 0,1 à 10 % en poids de Fe₂O₃
(e) 0,1 à 10 % en poids de MgO
(f) 0,1 à 10 % en poids de Na₂O
(g) 0,1 à 10 % en poids de CaO
(h) 0,01 à 5 % en poids de TiO₂
pour 100 % en poids de (a) + (b) + (c) + (d) + (e) + (f) + (g) + (h), jusqu'à l'obtention d'une poudre dont la taille moyenne des particules est inférieure ou égale à 2 um ;
(2) mélange de la poudre obtenue en (1) avec du carbone pulvérulent ;
(3) traitement thermique de carbonitruration de la poudre obtenue en (2), à une température T comprise entre 1525 et 1625°C pendant un laps de temps t de 3 à 6 h, sous un balayage d'azote,
le broyage de l'étape (1) étant conduit en effectuant les opérations successives suivantes :
- un pré-broyage permettant de faire passer les rebuts porcelainiers d'une dimension allant du cm à la dizaine de cm à une dimension de 1 mm à 0,1 mm avec une répartition multimodale, ledit pré-broyage pouvant notamment être effectué dans un concasseur à mâchoires ou un broyeur à percussion ;
- un broyage d'ajustement de la granulométrie, permettant de faire passer les rebuts porcelainiers prébroyés à une dimension moyenne de particule entre 2 et 30 um avec une répartition bimodale des particules, ledit broyage pouvant notamment être effectué dans un broyeur planétaire ;
- un broyage de finition par attrition, permettant de faire passer les particules à une dimension moyenne inférieure ou égale à 1,5 um, avec une répartition monomodale de celles-ci.

2. - Procédé selon la revendication 1, **caractérisé par le fait que** les rebuts porcelainiers sont des rebuts de la cuisson dite de dégourdi, laquelle, lors de la fabrication de pièces en porcelaine, fait suite à la réalisation de pièces crues par coulage ou par calibrage ou par pressage, à partir de pâtes à base de kaolin, quartz et feldspath.

3. - Procédé selon l'une des revendications 1 et 2, **caractérisé par le fait que** le carbone pulvérulent est choisi parmi le noir de carbone, le noir de fumée, le charbon et le charbon actif.

4. - Procédé selon l'une des revendications 1 à 3, **caractérisé par le fait qu'**à l'étape (2), on ajoute du Fe₂O₃ à titre d'agent favorisant la conversion en β-SiAlON, à raison notamment de jusqu'à 0,5 partie en poids pour 100 parties en poids de la poudre obtenue à l'étape (1), en particulier de 0,1 jusqu'à 0,5 partie en poids pour 100 parties en poids de la poudre obtenue à l'étape (1).

5. - Procédé selon l'une des revendications 1 à 4, **caractérisé par le fait qu'**à l'étape (2) de mélange, on utilise 19 à 22 parties en poids de carbone pulvérulent pour 100 parties en poids de la poudre obtenue en (1).

6. - Procédé selon l'une des revendications 1 à 5, **caractérisé par le fait que** l'on conduit la carbonitruration sous un balayage d'azote à un débit de 50 à 75 L/h.

7. - Procédé selon l'une des revendications 1 à 6, **caractérisé par** le traitement thermique de l'étape (3) comporte une montée préalable en température du mélange de l'étape (2) jusqu'à la température T.

8. - Procédé selon l'une des revendications 1 à 7, **caractérisé par le fait que** l'on conduit la carbonitruration sur une poudre à l'air libre.

9. - Procédé selon l'une des revendications 1 à 9, **caractérisé par le fait que** l'on obtient une poudre céramique ayant la composition suivante :
- 60 à 87 % en poids de β-SiAlON ;
- 11 à 30 % en poids de α-Al₂O₃ ;
- 2 à 8 % en poids de x-SiAlON ;
- 0 à 5 % en poids de mullite.
